# EUROPÄISCHE PATENTSCHRIFT

(11) **EP 0 812 109 B1**
(45) Veröffentlichungstag und Bekanntmachung des Hinweises auf die Patenterteilung: **29.12.1999**
(21) Anmeldenummer: 97116137.7
(22) Anmeldetag: 03.08.1992
(51) Int. Cl.: H04N 7/087

(54) **Verfahren zum Übertragen von Daten in Fernsehzeilen**
Method of transmitting data in television lines
Procédé pour la transmission de données dans des lignes de télévision

(30) Priorität: 01.08.1991 DE 4125473; 08.10.1991 DE 4133355; 09.10.1991 DE 4133496
(43) Veröffentlichungstag der Anmeldung: 10.12.1997
(62) Teilanmeldung aus: 92916819.3
(73) Patentinhaber: Thomson Consumer Electronics Sales GmbH, 30453 Hannover (DE)
(72) Erfinder: Eitz, Gerhard, 85586 Poing (DE); Quandt, Siegfried, 78050 Villingen-Schwenningen (DE); Gyarmati, Sandor, 78052 Villingen-Schwenningen (DE)
(74) Vertreter: Hartnack, Wolfgang, Dipl.-Ing.

(56) Entgegenhaltungen:
- EP-A- 0 028 443
- EP-A- 0 343 740
- WO-A-90/13970
- DE-A- 3 914 697
- DE-C- 3 418 068
- DE-C- 3 634 757
- US-A- 4 679 083
- US-A- 4 956 709

## Beschreibung

Nach in Deutschland, Großbritannien und in anderen europäischen Staaten von den Fernsehsendeanstalten verwendeten oder vorgeschlagenen Teletextstandards (Videotextstandards), beispielsweise nach dem sogenannten "Level-1-Teletext"-Standard, werden die codierten, alphanumerischen Daten in vertikalen Austastlücken eines Fernsehsignals zyklisch oder quasi-zyklisch. übertragen. Die übertragenen Daten werden wiedergabeseitig gesammelt und seitenweise als stehendes Fernsehbild (= Teletext-Seite) dargestellt. Die jeweils eine Seite repräsentierenden Nutzdaten sind zu einem Block zusammengefaßt, welchem ein Datenpaket als Kopfzeile vorangestellt ist, das die Seitennummer des betreffenden Blocks identifiziert.

Gemäß der DE-A-34 18 068 ist vorgesehen, daß jeder Kopfzeile ein weiteres Datenpaket (Vorkopfzeile) von der Länge einer Fernsehzeile vorangestellt wird, wobei diese Vorkopfzeile die Seitennummer der im Übertrangungszyklus übernächsten Seite identifiziert. In einer Variante gemäß dieser Druckschrift kann auch vorgesehen sein, daß innerhalb einer Zeile des dem Ende des momentan übertragenen Blocks vorangehenden Fernsehhalbbildes eine Vorkopfzeile von der Länge einer Fernsehzeile übertragen wird, und daß unmittelbar hinter der Vorkopfzeile die Kopfzeile des momentan übertragenen Blocks wiederholt wird. Eine solchermaßen wiederholte Kopfzeile wird auch als Zwischenkopfzeile bezeichnet.

Das wiedergabeseitige Sammeln der Daten erfolgt bei einem bekannten Decoder (Firmendruckschrift "Valvo Technische Informationen für die Industrie", Nr. TI 840314) in einer Seitenspeicheranordnung, deren Speichervolumen der maximalen Datenmenge von vier oder acht Seiten entspricht. Wegen des "adaptiven Übertrangungsprinzips" zwingt diese Beschränkung des Speichervolumens dazu, daß vor der Darstellung einer vom Benutzer angewählten Seite der Speicher gelöscht werden muß, bevor die Daten der angewählten Seite - sobald sie im Übertragungszyklus auftreten - eingeladen werden können. Das "adaptive Übertrangungsprinzip" besagt, daß eine Teletextzeile ohne Informationsgehalt ("leer") nicht übertragen wird, um den Übertrangungszyklus zu verkürzen. Der Löschvorgang folgt dabei erst dann, wenn die Kopfzeile der angewählten Seite decodiert wird.

Da dieser Löschvorgang bei einer beträchtlichen Anzahl von bisher in Fernsehempfangsgeräten verwendeten Teletext-Decodern etwa 20 Millisekunden dauert, muß aus Kompatibilitätsgründen zwischen der Übertrangung der Kopfzeile und der übertragung der darauf folgenden Nutzdaten ein Warteintervall von etwa 20 Millisekunden liegen. Gleiches gilt, wenn statt einer Neuanwahl einer Seite in der Kopfzeile ein spezieller Löschbefehl enthalten ist, was beispielsweise bei sogenannten Mehrfachseiten des Übertrangungszyklus (mehrere verschiedene Seiten mit der gleichen Seitennummer) der Fall ist. Die Einhaltung dieses Warteintervalls erfolgt dadurch, daß die Kopfzeile und die nachfolgenden Nutzdaten in getrennten Fernsehhalbbildern übertragen werden.

Gegebenenfalls werden im Fernsehhalbbild, in welchem die Kopfzeile übertragen wird, restliche Teletextzeilen durch Wiederholen der Kopfzeile aufgefüllt. Diese Kopfzeilenwiederholung geht allerdings auf Kosten einer verlängerten Zyklusdauer. Da im Falle der Verwendung eines Seitenspeichers für mehrere Seiten und bei dem Vollkanalbetrieb mit adaptiver SeitenÜbertrangung im sichtbaren Bildbereich das Löschintervall von 20 Millisekunden für die Löschung des gesamten Seitenspeichers zu kurz bzw. überhaupt nicht vorhanden ist, muß in diesen Fällen eine Löschung des gesamten Seitenspeichers in der herkömmlichen Weise vermieden werden.

Hierzu ist es aus der EP-A-0 343 740 bekannt, für alle Zeilen einer Seite einschließlich der Kopfzeile eine gemeinsame Kennung zu speichern. Ändert sich die Seite durch Übertragen einer neuen Kopfzeile, so wird für alle Zeilen der neuen Seite ein gemeinsamer neuer Kennungswert entsprechend dem kennungswert der neuen Kopfzeile vergeben. Der Decoder vergleicht beim Auslesen den Kennungswert der einzelnen Zeilen und liest nur bei Gleichheit die betreffende Zeile aus; bei Ungleichheit werden Leerzeichen für die betreffende Zeile ausgelesen.

Aus dieser Druckschrift ist es ferner bekannt, zur Übertragung zusätzlicher Informationen, wie z.B. neuer Zeichen oder kommerzieller Daten, jede Seite durch zusätzliche Zeilen Nr. 26 bis 31 ("Geisterzeilen") zu verlängern, was jedoch zu Lasten der Zykluszeit geht, da sich an der Wiederholung der Kopfzeilen nichts ändert. Auch für diese Geisterzeilen wird eine Kennung gespeichert, die im Falle der nicht-seitenbezogenen Geisterzeilen Nr. 29 bis 31 nicht durch eine Kopfzeile verändert wird.

Es ist schließlich aus der DE-A-39 14 697 bekannt, bei Teletext auch Sonderzeichen, Feinstrukturen und Farbschattierungen kompatibel zum bestehenden Teletext-Standard in Ergänzungsseiten zu übertragen, die einer Teletextzeile (Level 1) zugeordnet sind. Empfangsseitig werden die einer gewünschten Teletextseite zugeordnete(n) Ergänzungsseite(n) getrennt von den betreffenden Teletextseite(n) zwischengespeichert und derart verarbeitet, daß an denjenigen Zeichenplätzen, wo keine Ergänzungsdaten vorliegen, die den Grunddaten zugeordneten Zeichen zur Anzeige gebracht werden. An denjenigen Zeichenplätzen, wo Ergänzungsdaten vorliegen, werden die an den Grunddaten im Zusammenwirken mit den Ergänzungsdaten zugeordneten Zeichen zur Anzeige gebracht. Bei der Übertrangung der Ergänzungsdaten zusätzlich zu den normalen Teletextseiten (Level 1) wird die Zyklusdauer entsprechend der Anzahl und der Länge der Ergänzungsseiten erhöht.

Während üblicherweise im Fernsehhalbbild, in welchem die Kopfzeile übertragen wird, gegebenenfalls restliche Textzeilen durch Wiederholen der Kopfzeile aufgefüllt werden, ist gemäß der DE-A-34 18 068 vorgesehen, auf die redundante Wiederholung der Kopfzeilen zu verzichten und jeder Kopfzeile ein weiteres Datenpaket (Vorkopfzeile) von der Länge einer Fernsehzeile voranzustellen, welches die Seitennummer der im Übertrangungszyklus übernächsten Seite identifiziert. Ferner ist gemäß dieser Druckschrift vorgesehen, daß das Löschen des Seitenspeichers bereits während der übertragung der der gewünschten Seite unmittelbar vorangehenden Seite erfolgt, so daß eine Wiederholung der Kopfzeilen auch unter Berücksichtigung der erforderlichen Löschzeiten entbehrlich ist. Mit diesem Verfahren kann daher die Zyklusdauer und damit die durchschnittliche Wartezeit auf eine bestimmte Seite entscheidend verringert werden.

In der Praxis sind bei der Durchführung des aus der DE-A-34 18 068 vorbekannten Vorkopfzeilen-Verfahrens jedoch Probleme aufgetreten, die dazu geführt haben, daß solche Übertragungen eingestellt werden mußten.

Zum besseren Verständnis des Teletext-Übertragungsverfahrens wird auf die Druckschrift "Technische Richtlinie ARD/ZDF, Nr. 8 R 4, Fernsehtext-Spezifikation", Hrsg. IRT Institut für Rundfunktechnik GmbH, München, Juni 1986, Bezug genommen. Danach sind bis zu acht Magazine, deren jeweilige Nummer im folgenden symbolisch mit dem Buchstaben "m" (m = 1, 2, ..., 8) dargestellt ist, vorgesehen, denen die Teletext-Seiten zugeordnet werden können. Jedes Magazin kann bis zu 100 Seiten aufweisen, deren jeweilige Nummer im folgenden symbolisch mit dem Buchstaben "n" (n = 00, 01, 02, ..., 99) dargestellt ist. Eine vollständige Adressierung einer Teletext-Seite kann also durch eine dreistellige Dezimalzahl (m,n) erfolgen, deren erste Stelle die Magazin- und deren zweite und dritte Stelle die Seitennummer innerhalb dieses Magazins angeben. Beispielsweise stellt die Teletext-Seite 103 die Seite Nummer 03 in dem Magazin Nummer 1 dar. Für Ausbaustufen des Teletextdienstes ist eine Erweiterung auf Hexadezimalzahlen vorgesehen.

Die bei dem Vorkopfzeilen-Verfahren aufgetretenen Schwierigkeiten sind vor allem darauf zurückzuführen, daß eine asynchrone Anforderung einer beliebigen Seite in Abhängigkeit von internen Steuerungsabläufen des verwendeten Teletext-Decoders dazu führen kann, daß diese Seite nicht vollständig oder überhaupt nicht eingelesen wird.

Letzteres kann beispielsweise dann geschehen, wenn empfängerseitig eine gewünschte Teletext-Seite (m,(n+1)) angefordert wird, bevor die dieser Seite zugeordnete Vorkopfzeile (m,(n+1))VK, die dieselbe Information wie die dieser Seite zugeordnete Kopfzeile (m,(n+1))K aufweist, empfangen wird. Im Anschluß an die Vorkopfzeile (m,(n+1))VK folgt nach dem bekannten Verfahren die Kopfzeile (m,n)K, was bei dem genannten internen Steuerungsablauf des Teletext-Decoders zugleich als Abschluß der Datenakquisition für die Teletext-Seite (m,n+1) gewertet wird, so daß der nach Abschluß der übertragung für die Teletext-Seite (m,n) erfolgende Empfang der Kopfzeile (m,(n+1))K den Decoder nicht mehr für Datenakquisition bezüglich der Seite (m,(n+1)) öffnet. Die Seite (m,(n+1)) "gilt" ja als bereits empfangen und braucht folglich nicht mehr eingelesen zu werden. Ist zwischen der Vorkopfzeile (m,(n+1))VK und der Kopfzeile (m,n)K noch ein Zwischenkopf (m,n)ZK mit restlichen, der Teletext-Seite (m,n) zugeordneten Datenzeilen im Übertragungszyklus enthalten, so wird aus denselben Gründen die Seite (m,n) nur unvollständig eingespeichert.

Insbesondere bei Anforderung von Seiten, die wichtige Informationen für Decoder-interne Sortier- und/oder Verwaltungsangaben enthalten, beispielsweise die "TOP" (= Table of Pages) genannten Systemtabellen (vergl. DE-A-36 34 757 ), kann dies zu beträchtlichen Problemen führen, ganz abgesehen von optischen Ungereimtheiten, die bei fehlenden Zeilen auch "normale" Teletextseiten ohnehin schon beeinträchtigen können.

Der Erfindung liegt die Aufgabe zugrunde, das eingangs genannte Verfahren so auszubilden, daß herkömmliche Fernsehtextdecoder gemäß Level 1 nicht gestört werden.

Diese Aufgabe wird durch die in Anspruch 1 angegebenen Merkmale gelöst.

Auf die Übertragung der oben erläuterten Vorkopfzeilen und Zwischenkopfzeilen kann verzichtet werden , ohne daß dadurch eine Verlängerung der Zyklusdauer in Kauf genommen werden muß, ferner wird erreicht, daß die mit dem Prinzip des Vorkopfzeilen-Verfahrens verbundene Verkürzung der Zyklusdauer weiterhin nutzbar gemacht wird und überdies im Vergleich dazu eine weitere Verkürzung der Zyklusdauer erzielt wird.

Diese Ausbildung beruht auf der Erkenntnis, Videotext-Decoder im sogenannten Parallel-Modus zu betreiben, so daß nach dem Empfang einer Kopfzeile der nachfolgende Empfang von Kopfzeilen noch nicht die Datenakquisition abschließt.

In einer Weiterbildung wird bei der Ausstrahlung der Teletext-Daten zugleich das im Teletext-Standard zur Unterscheidung der Magazin-übertragungsarten - serielle oder parallele Magazin-Übertrangung - vorgesehene Steuerbit C11 mit dem den Parallel-Modus kennzeichnenden Wert übertragen. Gemäß der oben genannten ARD/ZDF-Spezifikation wird hierzu das Steuerbit C11 auf den Wert "null" gesetzt übertragen.

Dies hat den zusätzlichen Vorteil, daß die mit dem Prinzip des Vorkopfzeilen-Verfahrens verbundene Verkürzung der Zyklusdauer auch für solche herkömmlichen Teletext-Decoder auf kompatible Weise nutzbar gemacht wird, die für den eingangs erwähnten Löschvorgang etwa 20 Millisekunden benötigen.

Die Betriebsart "Parallel-Modus" ist seinerzeit für einen völlig anderen Zweck in die ARD/ZDF-Spezifikation aufgenommen worden. Durch die Zuordnung einzelner Magazine auf jeweils eine bestimmte Zeile oder Zeilengruppe sollte sich für die innerhalb der Vertikal-Austastlücke von Fernsehhalbbildern verfügbaren Zeilen mehrere unabhängige Übertrangungszyklen einrichten lassen. Dabei mußten dann je nach verwendeter Seitenzahl innerhalb der einzelnen Übertrangungszyklen allerdings unterschiedliche Zugriffszeiten zu den Seiten der einzelnen Zyklen in Kauf genommen werden.

Die genannte Weiterbildung beruht auf der Erkenntnis, vorhandene Steuereinrichtungen in Videotext-Decodern gezielt so auszunutzen, daß nach dem Empfang einer Kopfzeile der nachfolgende Empfang von Kopfzeilen noch nicht die Datenakquisition abschließt. Wird dem Decoder nämlich mit Hilfe des empfangenen betreffenden Steuerbits das Vorliegen der Betriebsart "Parallel-Modus" signalisiert, so wird die decoderseitige Datenakquisition erst abgeschlossen, wenn nach Empfang einer eine angeforderte Seite kennzeichnenden Kopfzeile erneut eine Kopfzeile desselben Magazins empfangen wird.

Mit dieser Erkenntnis läßt sich bei allen auf dem Markt befindlichen Decodern, die der oben genannten ARD/ZDF-Spezifikation genügen, beispielsweise bei den unter den Typenbezeichnungen "TPU 2732" und "TPU 2735" bekannten Teletext-Prozessoren der Firma ITT Semiconductors, die Bereitschaft zur Datenakquisition einer gewünschten, vom Benutzer angeforderten Teletext-Seite ab dem auf die Aufforderung nachfolgenden Empfang der entsprechenden Kopfzeile automatisch solange fortsetzen, bis eine demselben Magazin wie diese Kopfzeile zugeordnete andere Kopfzeile korrekt empfangen wird.

Eine zweite Ausbildung hat den Vorteil, daß die mit dem Prinzip des Vorkopfzeilen-Verfahren verbundene Verkürzung der Zyklusdauer auf kompatible Weise nutzbar gemacht wird.

Die zweite Ausbildung beruht auf der Erkenntnis, vorhandene Steuereinrichtungen in Videotext-Decodern gezielt so auszunutzen, daß nach dem Empfang einer Vorkopfzeile oder Zwischenkopfzeile der nachfolgende Empfang von Kopfzeilen, Vorkopfzeilen oder Zwischenkopfzeilen noch nicht die Datenakquisition abschließt.

Mit dieser Erkenntnis läßt sich beispielsweise auch bei den schon oben erwähnten, unter den Typenbezeichnungen "TPU 2732" und "TPU 2735" bekannten Teletext-Prozessoren der Firma ITT Semiconductors die Fehlererkennungseinrichtung zu solchen Steuerungszwecken einsetzen. Wird nämlich beim Empfang von Teletext-Seiten von der Fehlererkennungseinrichtung ein Bit-Fehler erkannt, so wird für den internen Steuerungsablauf ein Fehler-Flag (error flag) gesetzt. Dies hat zur Folge daß eine so markierte Teletext-Seite erneut geladen wird, sobald sie im Zyklus wieder empfangen wird. Es genügt also bereits, alle Vorkopfzeilen senderseitig in beabsichtigter Weise mit jeweils mindestens einem Bit-Fehler versehen auszustrahlen, um in aller Regel den Teletext-Decoder so zu steuern, daß der nachfolgende Empfang von Kopfzeilen, Vorkopfzeilen oder Zwischenkopfzeilen noch nicht die Datenakquisition abschließt. Sind Zwischenkopfzeilen im Übertrangungszyklus vorgesehen, so sind auch diese in ähnlicher erwünschter Weise fehlerbehaftet auszustrahlen.

Da auf der Übertrangungsstrecke zwischen Sender und Empfänger Fehler auftreten können, die möglicherweise gerade einen senderseitig beabsichtigt vorgegebenen Bit-Fehler kompensieren, ist in Weiterbildung vorgesehen, mehrere oder sogar alle mit Paritätsschutz zu versehenden Daten der Vorkopfzeilen und/oder der Zwischenkopfzeilen mit Paritätsfehlern versehen auszustrahlen, um sicherzustellen, daß decoderseitig mit erhöhter Wahrscheinlichkeit Fehler erkannt werden. Es kann weiter vorgesehen sein, daß mit Hamming-Code zu schützende Daten senderseitig nicht mit Fehlern versehen ausgestrahlt werden, um sicherzustellen, daß diese Daten mit größerer Wahrscheinlichkeit selbst bei während der Übertrangungsstrecke auftretenden Fehlern decoderseitig regenerierbar bleiben.

Das erfindungsgemäße Verfahren nach Anspruch 1 hat den Vorteil, daß alphanumerische Datensignale so übertragen werden, daß Ergänzungsseiten für höhere Teletext-Level den Gesamtzyklus nicht oder nur wenig belasten.

Eine vorteilhafte Ausgestaltung eines Verfahrens zum Empfangen der erfindungsgemäß übertragenen Daten ergibt sich aus dem Anspruch 2.

Bei der Ausbildung des erfindungsgemäßen Verfahrens wird die Übertrangungskapazität, die beim Stand der Technik durch die Wiederholung der Kopfzeilen verloren geht, zur übertragung von Ergänzungsseiten genutzt.

Weitere Merkmale, Vorteile und Einzelheiten der Erfindung werden nachstehend an Ausführungsbeispielen anhand der Zeichnung näher erläutert. Dabei zeigen:
- Fig. 1a: eine schematische Darstellung eines Zyklus' von Teletext-Seiten nach dem Stand der Technik unter Verwendung von Vorkopfzeilen,
- Fig. 1b: eine schematische Darstellung eines Zyklus' von Teletext-Seiten eines Ausführungsbeispiels des gungsverfahrens,
- Fig. 2a: einen schematischen Ausschnitt aus einem Zyklus von Teletext-Zeilen nach dem Stand der Technik, jedoch ohne Vorkopfzeilen-Verfahren,
- Fig. 2b: einen schematischen Ausschnitt aus einem Zyklus von Teletext-Zeilen nach dem Stand der Technik unter Verwendung von Vorköpfen und Zwischenköpfen.
- Fig. 3a,b: einen schematischen Ausschnitt aus einem Zyklus von Teletextzeilen nach einem ersten Ausführungsbeispiel der erfindungsgemäßen Ausbildung des Übertrangungsverfahrens (Fig. 3b) in Gegenüberstellung zu dem Stand der Technik (Fig. 3a), und
- Fig. 3c: einen schematischen Ausschnitt ähnlich wie in Fig. 3b, jedoch für ein zweites Ausführungsbeispiel der erfindungsgemäßen Ausbildung des gungsverfahrens.

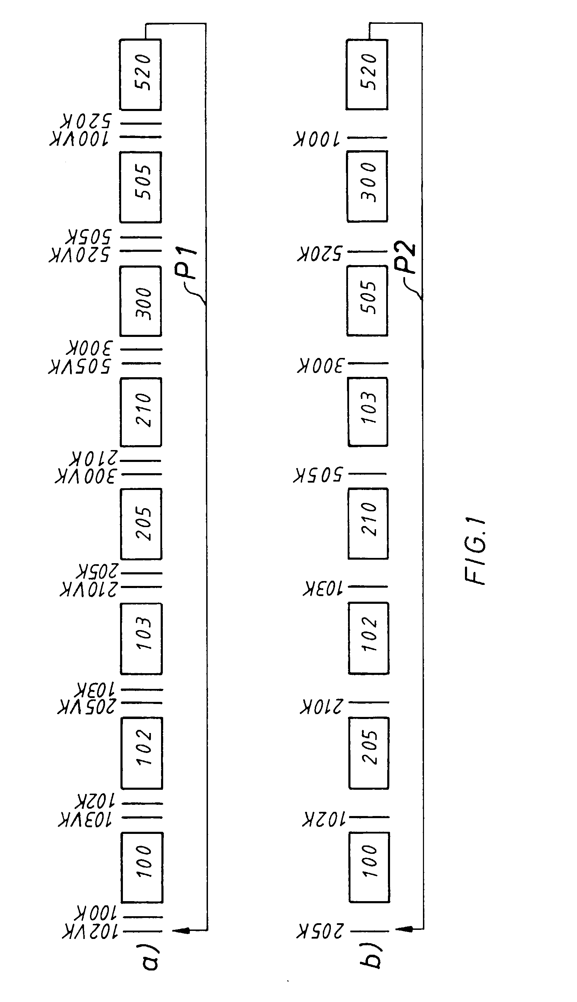

Der in Fig. 1a schematisch dargestellte Übertrangungszyklus von Teletext-Seiten enthält Blöcke 100, 102, 103, 205, 210, 300, 505 und 520, welchen jeweils eine sie kennzeichnende Kopfzeile 100K, 102K, ..., 520K vorausgeht. Vor jeder dieser Kopfzeilen wird eine den jeweils übernächsten Block kennzeichnende Vorkopfzeile 102VK, 103VK, ..., 100VK übertragen. Die in Fig. 1a der Kopfzeile 520K und dem Block 520 vorausgehende Vorkopfzeile 100VK trägt der Tatsache Rechnung, daß sich nach der Übertrangung des Blocks 520 der Übertrangungszyklus wiederholt, wie dies durch den Pfeil P1 angedeutet ist.

Die Nutzdaten jedes der genannten Blöcke repräsentieren insgesamt eine Teletextseite. Die Nummer der betreffenden Teletext-Seite wird durch die ihr zugeordnete Kopfzeile (m,n)K identifiziert.

Mittels der Vorkopfzeile (m,n)VK erhält der empfängerseitige Decoder bereits bei Übertragungsbeginn einer Seite bzw. eines Blocks oder "zwischendurch" die Information, welche Seite als nächste Seite übertragen wird, so daß dann, wenn die Seitennummer (m,n) dieser nächsten Seite vom Benutzer angewählt wurde, bereits während der Übertrangung der unmittelbar vorangehenden Seite ((m-1),n-1)) mit der Löschung des Seitenspeichers im Decoder begonnen werden kann. Beim Auftreten der Kopfzeile (m,n)K der gewünschten Seite (m,n) können dann die einlaufenden Nutzdaten dieser Seite sofort vom leeren Seitenspeicher übernommen werden.

Üblicherweise steht in der vertikalen Austastlücke jedes Fernsehhalbbildes ein nur begrenzter Übertrangungsbereich, der beispielsweise fünf Fernsehzeilen umfassen kann, für die Übertrangung der Teletextdaten zur Verfügung. Im Extremfalle können hierfür auch alle Zeilen des Fernsehhalbbildes zur Verfügung stehen, beispielsweise bei einem sogenannten Videotext-Kanal des Kabelfernsehens.

Wegen des eingangs erläuterten Warteintervalls von ca. 20 Millisekunden muß gemäß dem Stand der Technik zwischen jeder Vorkopfzeile und der ersten Nutzdatenzeile des ihr zugeordneten Blocks ein zeitlicher Mindestabstand von ebenfalls ungefähr 20 Millisekunden eingehalten werden.

Die Vorkopfzeilen und die Zwischenkopfzeilen unterscheiden sich - abgesehen von ihrer Lage im Teletext-Datenzyklus - nach dem soweit beschriebenen bekannten Verfahren durch nichts von den zugehörigen Kopfzeilen. Daher führte die Anwendung dieses Verfahrens auch bei einer Anzahl von Teletext-Decodern auch zu fehlerhafter Wiedergabe von Teletext-Seiten. Die betroffenen Decoder hatten bei Empfang von durch Vorkopfzeilen angekündigten Zwischenkopfzeilen oder Kopfzeilen auf das Eintreffen einer neuen Teletext-Seite geschlossen. Die Decodersteuerung wertete das Einlesen der bereits begonnenen und nun eigentlich fortzusetzenden oder der nun eigentlich erst einzulesenden Seite als bereits abgeschlossen.

Bei Teletext-Decodern mit entsprechend geeigneten Steuerungseinrichtungen, wie beispielsweise bei den unter den Typenbezeichnungen "TPU 2732" und "TPU 2735" bekannten Teletext-Prozessoren der Firma ITT Semiconductors, läßt sich der Teletext-Decoder erfindungsgemäß senderseitig so steuern, daß er Datenakquisition nicht unerwünscht vorzeitig als abgeschlossen wertet. Die bei diesen Prozessoren und allen anderen, der genannten ARD/ZDF-Spezifikation entsprechenden Decodern vorgesehene Steuerbit-Erkennungseinrichtung läßt sich zu solchen Steuerungszwecken einsetzen.

Wird nämlich beim Empfang von Teletext-Seiten anhand des senderseitig entsprechend auf den Wert "null" gesetzten Steuerbits C11 decoderseitig erkannt, daß daß die Betriebsart "Parallel-Modus" vorliegt, so wird die decoderseitige Datenakquisition erst abgeschlossen, wenn nach Empfang einer eine angeforderte Seite kennzeichnenden Kopfzeile erneut eine Kopfzeile desselben Magazins empfangen wird.

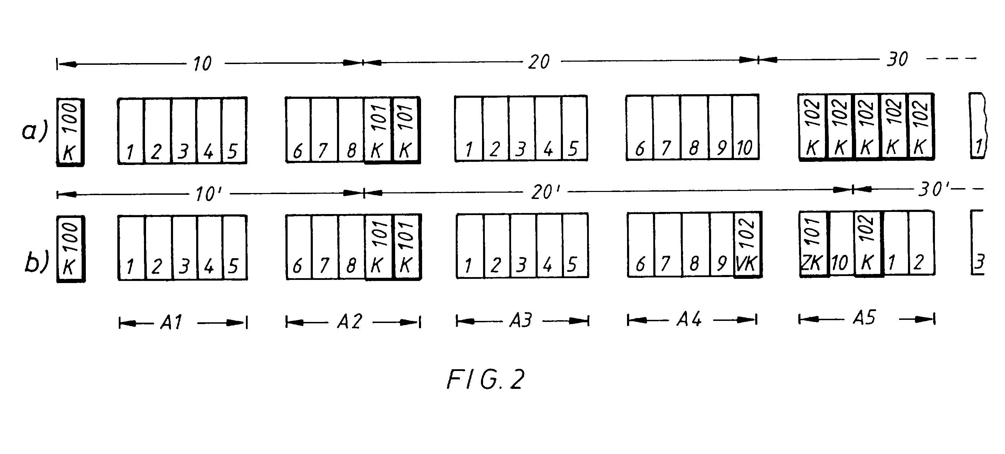

In dem in Fig. 1b schematisch dargestellte Übertrangungszyklus von Teletext-Seiten gemäß einem Ausführungsbeispiel der erfindungsgemäßen ersten Ausbildung des Verfahrens folgen nunmehr relativ zueinander an anderer Stelle im Übertrangungszyklus die zu der Fig. 1 beschriebenen Blöcke 100, 205, 102, 210, 103, 505, 300 und 520, welchen jeweils eine sie kennzeichnende Kopfzeile 100K, 205K, ..., 520K vorausgeht. Die nach dem in Fig. 2 dargestellten Verfahren übertragenen Vorkopfzeilen werden jedoch in der Weise in den Teletext-Datenstrom eingefügt, daß zwischen jeder Kopfzeile und dem ihm zugeordneten Block ein zum Löschen des für die zu akquirierenden Daten vorgesehenen Seitenspeichers hinreichender zeitlicher Mindestabstand, beispielsweise die erwähnten ca. 20 Millisekunden, eingehalten wird.

Die in der Darstellung in Fig. 1b dem Block 520 vorausgehende Vorkopfzeile 100K trägt der Tatsache Rechnung, daß sich nach der Übertrangung des Blocks 520 der Übertrangungszyklus mit der Übertrangung der Kopfzeile 205K, dem Block 100 etc. wiederholt, wie dies durch den Pfeil P2 angedeutet ist.

Die nach dem Stand der Technik bislang erforderlichen Vorkopfzeilen können bei dem zu Fig. 1b beschriebenen Übertrangungsverfahren ersatzlos entfallen, wodurch bei diesem Verfahren neben der Kompatibilität mit den auf dem Markt befindlichen Decodern noch der zusätzliche Vorteil erzielt wird, daß sich die Zyklusdauer im Vergleich zum Stand der Vorkopf-Technik noch weiter verkürzt.

Der in Fig. 2a dargestellte Ausschnitt aus einem Übertrangungszyklus von Teletext-Zeilen gemäß dem Stand der Technik enthält Blöcke 10, 20 und (teilweise) 30, welche jeweils eine vorgestellte Kopfzeile K und nachfolgende Nutzdaten-Zeilen 1, 2, 3, 4.... mit wechselnder Länge enthalten. Die Nutzdaten jedes Blockes 10, 20, 30 repräsentieren jeweils eine Teletext-seite. Die Nummer der betreffenden Teletextseite wird durch die zugeordnete Kopfzeile K identifiziert. Im dargestellten Beispielsfalle wird angenommen, daß in der vertikalen Austastlücke jedes Fernsehhalbbildes ein Übertrangungsbereich A1 bzw. A2 bzw. A3 ... mit fünf Fernsehzeilen für die Übertrangung der Teletextdaten zur Verfügung steht. Im Extremfalle können hierfür auch alle Zeilen des Fernsehhalbbildes zur Verfügung stehen, beispielsweise bei einem sogenannten Videotext-Kanal des Kabelfernsehens.

Wegen des eingangs erläuterten Warteintervalls von ca. 20 Millisekunden müßten gemäß dem Teletextstandard in den Übertragungsbereichen A2 und A5 die Kopfzeilen K einmal (A2) bzw. viermal (A5) wiederholt werden, um den benötigten Zeitabstand zwischen Kopfzeile und der nächstfolgenden Nutzdatenzeile 1 einzuhalten.

Um dies zu vermeiden, vgl. Fig. 2b, wird nach dem sogenannten Vorkopfzeilen-Verfahren vor einer Kopfzeile K eine Vorkopfzeile VK übertragen, welche die Seitennummer der im Übertrangungszyklus übernächsten Seite identifiziert. Im Falle des Blocks 20' identifiziert die Vorkopfzeile VK die Nummer die Seite 102, welche im darauffolgenden Block 30' übertragen wird. Mittels der Vorkopfzeile VK erhält der empfängerseitige Decoder bereits bei Übertrangungsbeginn einer Seite bzw. eines Blocks oder "zwischendurch" die Information, welche Seite als nächste Seite übertragen wird, so daß dann, wenn die Seitennummer dieser nächsten Seite vom Benutzer angewählt wurde, bereits während der Übertrangung der unmittelbar vorangehenden Seite mit der Löschung des Seitenspeichers im Decoder begonnen werden kann. Beim Auftreten der Kopfzeile K der gewünschten Seite können dann die einlaufenden Nutzdaten dieser Seite sofort vom leeren Seitenspeicher übernommen werden.

Im Falle des Blocks 20' liegt dessen Blockende im übertragungsbereich A5. Die Vorkopfzeile VK mit der Nummer der darauffolgenden Seite 102 wird daher im Übertrangungsbereich A4 übertragen, wobei die Lage der Vorkopfzeile VK innerhalb des Übertrangungsbereichs A4 frei gewählt werden kann. Um nach erfolgter Übertrangung der Vorkopfzeile VK die Seitenzugehörigkeit der darauffolgenden Nutzdatenzeile 10 des noch nicht vollständig übertragenen Blocks 20' dem Decoder zu identifizieren, wird unmittelbar im Anschluß an die Vorkopfzeile VK die Kopfzeile K des momentan übertragenen Blocks als Zwischenkopfzeile ZK wiederholt.

Die Vorkopfzeilen und die Zwischenkopfzeilen unterscheiden sich - abgesehen von ihrer Lage im Datenzyklus - nach dem soweit beschriebenen bekannten Verfahren durch nichts von den zugehörigen Kopfzeilen. Daher führte die Anwendung dieses bekannten Verfahrens bei einer Anzahl von Teletext-Decodern auch zu fehlerhafter Wiedergabe von Teletext-Seiten. Die betroffenen Decoder hatten bei Empfang von durch Vorkopfzeilen angekündigten Zwischenkopfzeilen oder Kopfzeilen auf das Eintreffen einer neuen Teletext-Seite geschlossen. Die Decodersteuerung wertete das Einlesen der bereits begonnenen und nun eigentlich fortzusetzenden oder der nun eigentlich erst einzulesenden Seite als bereits abgeschlossen.

Bei Teletext-Decodern mit entsprechend geeigneten Steuerungseinrichtungen, wie beispielsweise bei den unter den Typenbezeichnungen "TPU 2732" und "TPU 2735" bekannten Teletext-Prozessoren der Firma ITT Semiconductors, läßt sich der Teletext-Decoder nach einem Ausführungsbeispiel der einen Ausbildung des Übertrangungsverfahrens senderseitig so steuern, daß er die Datenakquisition nicht unerwünscht vorzeitig als abgeschlossen wertet. Beispielsweise läßt sich die bei solchen Prozessoren vorgesehene Fehlererkennungseinrichtung zu solchen Steuerungszwecken einsetzen. Wird nämlich beim Empfang von Teletext-Seiten von der Fehlererkennungseinrichtung ein Bit-Fehler erkannt, so wird für den internen Steuerungsablauf ein Fehler-Flag (error flag) gesetzt. Dies hat die Folge daß eine so markierte Teletext-Seite erneut geladen wird, sobald sie im Zyklus wieder empfangen wird.

Werden also beispielsweise alle Vorkopfzeilen senderseitig in beabsichtigter Weise mit jeweils mindestens einem Bit-Fehler versehen ausgestrahlt, so wird von der Prozessorsteuerung die Datenakquisition als noch nicht beendet gewertet, so daß der nachfolgende Empfang von Kopfzeilen, Vorkopfzeilen oder Zwischenkopfzeilen noch nicht die Datenakquisition abschließt. Trifft nun nach Empfang der mit Fehlern behafteten Vorkopfzeile die zugeordnete Kopfzeile oder Zwischenkopfzeile ein, so kann sogleich das Einlesen in den Speicher beginnen oder fortgesetzt werden. Sind Zwischenkopfzeilen im Übertrangungszyklus vorgesehen, so sind auch diese in ähnlicher erwünschter Weise fehlerbehaftet auszustrahlen.

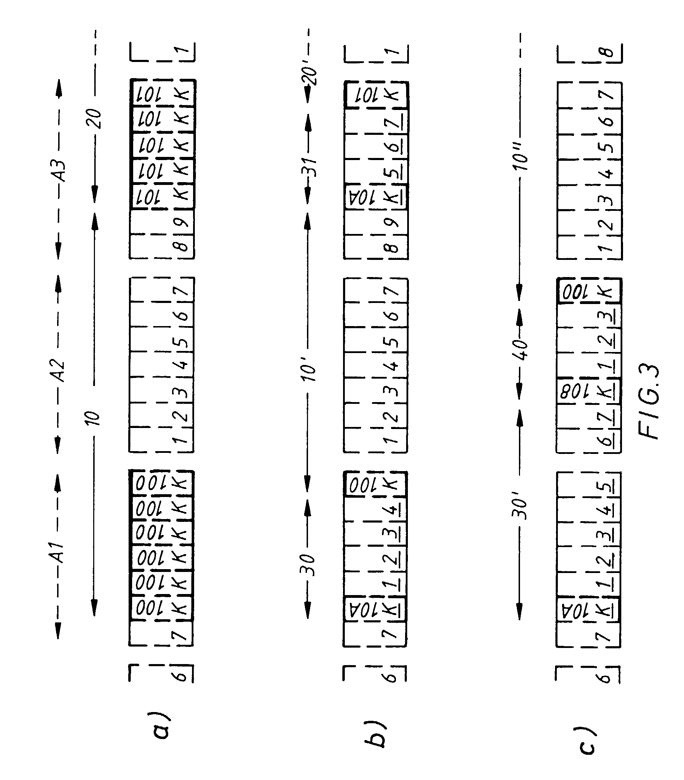

In Fig. 3a ist zu nachfolgenden Vergleichszwecken ein Ausschnitt aus einem bekannten Übertrangungszyklus von Teletext-zeilen dargestellt. Der bekannte Zyklus enthält Blöcke 10 und (teilweise) 20, welche eine vorangestellte Kopfzeile K und nachfolgende Nutzdatenzeilen 1, 2, 3, 4 ... mit wechselnder Länge enthalten. Die Nutzdaten jedes Blockes 10 bzw. 20 repräsentieren jeweils eine Telextextseite. Die Nummer der betreffenden Teletextseite wird durch die zugeordnete Kopfzeile K identifiziert. Im in Fig. 3 dargestellten Beispielsfalle wird angenommen, daß in dem vertikalen Austastbereich jedes Fernsehhalbbildes ein Übertrangungsbereich A1' bzw. A2' bzw. A3' ... mit sieben Fernsehzeilen für die Übertrangung der Teletextdaten zur Verfügung steht. Im Extremfalle können hierfür auch alle Zeilen des Fernsehhalbbildes zur Verfügung stehen.

Wegen des eingangs erläuterten Warteintervalls von ca. 20 Millisekunden müßten nach dem Stand der Technik in den Übertragungsbereichen A1' und A3' die Kopfzeilen K fünfmal (in A1') bzw. viermal (in A3') wiederholt werden, um den benötigten Zeitabstand zwischen Kopfzeile und der nächstfolgenden Nutzdatenzeile 1 einzuhalten.

Bei dem in Fig. 3b dargestellten ersten Ausführungsbeispiel der erfindungsgemäßen Ausbildung des Übertrangungsverfahrens werden die Fernsehzeilen nicht mit Wiederholungen der Kopfzeilen K belegt, sondern zur Übertrangung von Ergänzungsseiten genutzt. Im Falle des Blocks 10' werden die freiwerdenden fünf Zeilen von K 100 zur Übertrangung des Blocks 30 verwendet, der sich aus der Kopfzeile K 10A und den Nutzdatenzeilen 1 bis 4 der Ergänzungsseite 10A zusammensetzt. Die restlichen Nutzdatenzeilen 5 bis 7 der Ergänzungsseite 10A werden im Block 31 anstatt der Wiederholungen der Kopfzeile K 101 übertragen.

Wie man aus einem Vergleich der Blöcke 10, 20 und 10', 20' in Fig. 3a bzw. 3b erkennt, werden durch den Wegfall der Kopfzeilenwiederholung insgesamt neun Zeilen an Nutzdatenübertragungskapazität gewonnen. Dieser Gewinn vergrößert sich mit steigender Zeilenanzahl pro Austastbereich. Wie praktische Messungen ergeben haben, gehen bei einer Zeilenanzahl von sieben Zeilen pro Halbbild durchschnittlich etwa 12 % der verfügbaren Datenkapazität für Wiederholungen der Kopfzeilen verloren und können zur erfindungsgemäßen Übertrangung der Ergänzungsseiten genutzt werden. Bei elf Zeilen pro Halbbild sind für die Ergänzungsseiten bereits 30 % der ansonsten ungenützten Übertrangungskapazität verfügbar.

Der herkömmliche, empfängerseitige Decoder (Level 1) wird durch das vorgeschlagene Übertrangungsverfahren nicht gestört, da für alle herkömmlichen Teletextseiten das Warteintervall von etwa 20 Millisekunden eingehalten wird. Dagegen braucht das Warteintervall für die Ergänzungsseiten nicht eingehalten zu werden, da diese Ergänzungsseiten von neu zu konzipierenden Decodern für höhere Level mit einem schnellen internen Löschvorgang ausgewertet werden. Dabei wird von solchen neuen Decodern ein Sonderdatenblock anhand der zugeordneten Sonderkopfzeile identifiziert, welche zuvor empfangen und decodiert wurde. Der identifizierte Sonderdatenblock wird als Sonderteletextseite oder als Teil hiervon oder als Folge von Sonderteletextseiten abgelegt, um weiterverarbeitet werden zu können.

Reicht die verfügbare Übertrangungskapazität für Ergänzungsseiten nicht aus, so sieht ein weiteres, in Fig. 3c dargestelltes zweites Ausführungsbeispiel der erfindungsgemäßen Ausbildung des Übertrangungsverfahrens vor, nicht nur - wie in Figur 3b vorgeschlagen - die anstelle der Wiederholung der Kopfzeilen frei werdende Kapazität zur Übertrangung der Ergänzungsseiten zu nutzen, sondern weitere Austastbereiche ohne Beachtung des Warteintervalls für die Übertrangung von Ergänzungsseiten bereitzustellen. Die Anzahl der zusätzlich für die Ergänzungsseiten belegten Austastbereiche und die sich daraus ergebende Verlängerung des Zyklus ergibt sich aus der Datenmenge der in einem Zyklus zu übertragenden Ergänzungsseiten. Wie Fig. 3c zeigt, wird die Ergänzungsseite 10A, die gemäß Fig. 3b aus den Blöcken 30 und 31 besteht, durch die normale Teletextseite 100 (Block 10') nicht unterbrochen, sondern als ein durchgehender Block 30' übertragen. Die restliche Datenkapazität des Austastbereiches A2' wird für die Übertrangung einer weiteren Ergänzungsseite 10B (Block 40) genutzt. Die Seite 100 (Block 10") wird entsprechend verzögert.

Bei der Realisierung gemäß diesem Ausführungsbeispiel ist anzunehmen, daß beispielsweise bei der Übertrangung einer Ergänzungsseite für jeweils drei Teletextseiten (Level 1) die Zyklusdauer nicht um 30 %, sondern nur um 10 % ansteigt.

## Patentansprüche

1. Verfahren zum übertragen von Daten in Fernsehzeilen, welche wiedergabeseitig als Teletext-Seite dargestellt werden,
wobei jeweils eine Teletext-Seite repräsentierende Nutzdaten als ein oder mehrere Datenpakete (1 - 9) und diese wiederum zu einem Block (10) zusammengefaßt werden, welchem eine Kopfzeile in Form eines die Seiten- oder die Magazinnummer dieses Blocks identifizierenden Datenpaketes vorangestellt wird,
und wobei zwischen der Kopfzeile und der nächstfolgenden Zeile mit Nutzdaten der der Kopfzeile zugeordneten Teletextseite ein Warte-Intervall vorgesehen ist
und zwischen der letzten Nutzdatenzeile einer Teletext-Seite und einer Kopfzeile der im Zyklus folgenden Teletext-Seite ein oder mehrere Sonderdatenblöcke unter teilweiser oder vollständiger Belegung eines oder mehrerer aufeinanderfolgender Austastbereiche des Fernsehbilde übertragen werden können,
dadurch **gekennzeichnet**, daß die Kopfzeile (K100) der im Zyklus folgenden Teletext-Seite (Block 10') nicht wiederholt wird
und daß der Sonderdatenblock bzw. die Sonderdatenblöcke (30; 31) einem Teil einer Sonder-Teletext-Seite oder Teilen einer Folge von Sonder-Teletext-Seiten zugeordnet sind, die jeweils durch eine vor dem betreffenden Sonderdatenblock (30, 31) übertragene Sonderkopfzeile (K10A) identifiziert ist bzw. sind,
wobei für die Sonder-Teletext-Seiten kein Warteintervall zwischen der Sonderkopfzeile und der nächstfolgenden Sondernutzseite vorgesehen ist.

2. Verfahren zum Empfang von gemäß Anspruch 1 übertragen Daten, dadurch gekennzeichnet, daß ein Sonderdatenblock anhand der zugeordneten, empfangenen und decodierten Sonderkopfzeile identifiziert und als Sonder-Teletext-Seite oder als Teil hiervon oder als Folge von Sonder-Teletext-Seiten abgelegt wird.

3. Verfahren nach Anspruch 1 oder 2, wobei mindestens zwei Teletext-Seiten vorgesehen sind und alle Teletext-Seiten einem einzigen Magazin zugeordnet werden und zwischen einem Block (505) und der ihm zugeordneten Kopfzeile (505K) ein anderer Block (103) und/oder eine andere Kopfzeile (300K) eingefügt werden, wobei der andere Block (103) eine Magazinnummer (1) aufweist, die von der Magazinnummer (5) des erstgenannten Blocks (505) verschieden ist, und die andere Kopfzeile (300K) eine Magazinnummer (3) aufweist, die von der Magazinnummer (5) der erstgenannten Kopfzeile (505K) verschieden ist.

4. Verfahren nach einem der Ansprüche 1 oder 3, bei dem bei der Ausstrahlung der Teletext-Seiten zugleich ein im Teletext-Standard zur Unterscheidung der Magazin-übertragungsarten vorgesehenes Steuerbit mit dem den Parallel-Modus kennzeichnenden Wert übertragen wird.

5. Verfahren nach einem der Ansprüche 1 bis 4, wobei die Datenpakete der Blöcke einerseits und die ihnen jeweils zugeordneten Kopfzeilen andererseits in Zeilen unterschiedlicher Fernseh-Halbbilder übertragen und empfangsseitig entsprechend ausgewertet werden.

6. Verfahren nach einem der Ansprüche 1 und 3 bis 5, wobei zwischen dem Datenpaket einer Kopfzeile und den Datenpaketen des ihr zugeordneten Blocks ein zeitlicher Mindestabstand von etwa 20ms eingehalten wird.

7. Verfahren nach einem der Ansprüche 1 und 3 bis 6, wobei mindestens einer der Kopfzeilen ein weiteres Datenpaket als Vorkopfzeile (VK) vorangestellt wird, welches die Seitennummer der im Übertrangungszyklus übernächsten Seite identifiziert, und senderseitig in den Daten jeder Vorkopfzeile mindestens ein Paritätsfehler enthalten ist.

8. Verfahren nach Anspruch 7, bei dem die Kopfzeile des momentan übertragenen Blocks wiederholt als Zwischenkopfzeile (ZK) übertragen wird und senderseitig in den Daten jeder Zwischenkopfzeile mindestens ein Paritätsfehler enthalten ist.

9. Verfahren nach Anspruch 7 oder 8, wobei von den Daten der Vorkopfzeilen und gegebenenfalls von den Daten der Zwischenkopfzeilen nur oder alle solche Daten einen Paritätsfehler aufweisen, die entsprechend einer anzuwendenden Übertrangungsnorm mit Paritätsschutz zu versehen sind.

10. Verfahren nach Anspruch 8 oder 9, bei dem bei den Daten der Vorkopfzeilen und/oder gegebenenfalls bei den Daten der Zwischenkopfzeilen all diejenigen Daten keinen Paritätsfehler aufweisen, die entsprechend der anzuwendenden Übertrangungsnorm durch Hamming-Code mit Fehlerschutz zu versehen sind.

## Claims

1. Method of transmitting data in television lines being displayed at the reproduction end in form of a teletext-page
wherein user data each representing a teletext page are combined as one or more data packets (1-9) and these are combined to a block (10) a header in the form of a data packet identifying the page- or magazine-number of this block being placed in front of said block, and
wherein a waiting period is provided between the header and the next-following line including user data of the teletext page allocated to the header,
and wherein one or more special data blocks can be transmitted with partly or complete occupation of one or more succeeding blanking intervals of the television picture between the last user data line of a teletext-page and a header of the teletext page following within the cycle,
characterized in that the header (K100) of the teletext-page (block 10') following within the cycle is not repeated,
and in that the special data block and the special data blocks (30; 31), respectively, are allocated to a part of a special teletext-page or to parts of a sequence of special teletext-pages which are identified by a special header (K10A) transmitted before the relevant special data block (30, 31),
wherein no waiting period is provided for the special teletext pages between the special header and the next-following special user-page.

2. Method of receiving data transmitted in accordance with claim 1, characterized in that a special data block is identified by means of the allocated, received and decoded special header and is deposited as special teletext-page or as a part therefrom or as a sequence of special teletext-pages.

3. Method in accordance with claim 1 or 2, wherein at last two teletext-pages are provided and all teletext-pages are allocated to a single magazine and another block (103) and/or another header is inserted between a block (505) and the header allocated therewith, wherein the other block (103) contains a magazine number (1) differing from the magazine number (5) of the first-mentioned block (505) and the other header (300K) contains a magazine number (3) differing from the magazine number (5) of the first-mentioned header (505K).

4. Method in accordance with one of claims 1 or 3, wherein with the radiation of the teletext-pages a control bit provided within the teletext-standard for differentiation of the magazine-transmission-types is transmitted with the value characterizing the parallel mode.

5. Method in accordance with one of claims 1 to 4, wherein the data packets of the blocks on the one hand and the headers allocated thereto on the other hand are transmitted within lines of different television fields and are evaluated correspondingly at the receiving end.

6. Method in accordance with one of claims 1 and 3 to 5, wherein a minimum time span of approximately 20 milliseconds is observed between the data packet of one header and the data packets of the block associated therewith.

7. Method in accordance with one of claims 1 and 3 to 6, wherein a further data packet is placed as pre-header (VK) in front of at least one of the headers which packet identifies the page number of the next but one page within the transmission cycle and wherein at the transmitter end at least one parity error is included in the data of each pre-header.

8. Method in accordance with claim 7, wherein the header of the instantaneously transmitted block is transmitted repeatedly as intermediate header (ZK) and at least one parity error is included within the data of each intermediate header.

9. Method in accordance with claim 7 or 8, wherein among the data of the pre-headers and perhaps the data of the intermediate headers only or all such data include a parity error which are to be provided with a parity protection according to the transmission standard to be used.

10. Method in accordance with claim 8 or 9, wherein among the data of the pre-headers and/or possibly the data of the intermediate headers all those data do not include a parity error which are to be provided with error protection by Hamming-code according to the transmission standard to be used.

## Revendications

1. Procédé pour la transmission de données dans des lignes de télévision représentées lors de la reproduction en tant que page télétexte,
où des données effectives représentant une page télétexte sont regroupées en tant que un ou plusieurs paquets de données (1-9) en un bloc (10) placé devant une ligne de tête, sous la forme d'un paquet de données identifiant le numéro de page ou de magazine de ce bloc
et où un intervalle d'attente est prévu entre la ligne de tête et la ligne qui suit, avec les données effectives de la page télétexte associée à la ligne de tête
et un ou plusieurs blocs de données spéciales peuvent être transmis en occupant partiellement ou totalement une ou plusieurs zones de suppression successives relatives à l'image de télévision, entre la dernière ligne des données effectives d'une page télétexte et une ligne de tête de la page télétexte qui suit dans le cycle,
**caractérisé en ce que** la ligne de tête (K100) de la page télétexte (bloc 10') qui suit dans le cycle n'est pas répétée
**et en ce que** le ou les bloc(s) de données spéciales (30 ; 31) est (sont) associé(s) à une partie d'une page télétexte spéciale ou à des parties d'une suite de pages télétexte spéciales et identifié(s) respectivement par une ligne de texte spéciale (K10A) transmise avant le bloc de données spéciales (30, 31) concerné,
où aucun intervalle d'attente n'est prévu pour les pages télétexte spéciales, entre la ligne de tête spéciale et la page utile spéciale suivante.

2. Procédé pour la réception de données transmises conformément à la revendication 1, **caractérisé en ce qu**'un bloc de données spéciales est identifié à l'aide de la ligne de tête spéciale associée, reçue et décodée et est classé en tant que page télétexte spéciale ou en tant que partie de cette page ou en tant que suite de pages télétexte spéciales.

3. Procédé conforme à la revendication 1 ou 2, où au moins deux pages télétexte sont prévues et où toutes les pages télétexte sont associées à un seul magazine et un autre bloc (103) et/ou une autre ligne de tête (300K) sont insérés entre un bloc (505) et la ligne de tête (505K) qui lui est associée, où l'autre bloc (103) présente un numéro de magazine (1) différent du numéro de magazine (5) du premier bloc nommé (505) et l'autre ligne de tête (300K) présente un numéro de magazine (3) différent du numéro de magazine (5) de la première ligne de tête nommée (505K).

4. Procédé conforme à la revendication 1 ou 3, où, lors de l'émission des pages télétexte un bit de commande, prévu dans la norme télétexte pour différencier les types de transmission des magazines, est transmis avec la valeur caractérisant le mode parallèle.

5. Procédé conforme à l'une des revendications 1 à 4, où les paquets de données des blocs d'une part et les lignes de texte qui leur sont associées d'autre part sont transmis dans des lignes de différentes trames de télévision et évalués dans le récepteur en fonction.

6. Procédé conforme à l'une des revendications 1 et 3 à 5, où une période minimale d'environ 20 ms est respectée entre le paquet de données d'une ligne de tête et les paquets de données du bloc associé.

7. Procédé conforme à l'une des revendications 1 et 3 à 6, où un autre paquet de données est placé devant au moins une des lignes de tête en tant que ligne d'avant-tête (VK) et indique le numéro des pages situées après la page suivante figurant dans le cycle de transmission et les données de chaque ligne d'avant-tête contiennent au moins une erreur de parité au niveau de l'émetteur.

8. Procédé conforme à la revendication 7, où la ligne de tête du bloc transmis instantanément est transmis de manière répétée en tant que ligne de tête intermédiaire (ZK) et les données de chaque ligne de tête intermédiaire contiennent au moins une erreur de parité au niveau de l'émetteur.

9. Procédé conforme à la revendication 7 ou 8, où toutes les données des lignes d'avant-tête et le cas échéant les données des lignes de tête intermédiaires, devant être pourvues d'une protection de parité conforme à la norme de transmission applicable, présentent une erreur de parité.

10. Procédé conforme à la revendication 8 ou 9, où toutes les données des lignes d'avant-tête et/ou le cas échéant les données des lignes de tête intermédiaires, devant être pourvues du code Hamming de protection contre les erreurs conforme à la norme de transmission applicable, ne présentent aucune erreur de parité.
